# EUROPÄISCHE PATENTSCHRIFT

(11) **EP 3 227 485 B1**
(45) Veröffentlichungstag und Bekanntmachung des Hinweises auf die Patenterteilung: **25.09.2019**
(21) Anmeldenummer: 15804746.4
(22) Anmeldetag: 02.12.2015
(51) Int. Cl.: D04H 1/00, B29D 99/00, B29C 43/00, B68G 7/02, D04H 1/435, D04H 1/54, D04H 1/541, D01F 6/62

(54) **TEXTILPRODUKT, VERFAHREN ZUR HERSTELLUNG DES TEXTILPRODUKTES SOWIE VERWENDUNGEN DES TEXTILPRODUKTES**
TEXTILE PRODUCT, METHOD FOR PRODUCING SAID TEXTILE PRODUCT AND USES OF SAID TEXTILE PRODUCT
PRODUIT TEXTILE, PROCÉDÉ DE FABRICATION DUDIT PRODUIT TEXTILE ET UTILISATIONS DUDIT PRODUIT TEXTILE

(30) Priorität: 02.12.2014 DE 102014224681
(43) Veröffentlichungstag der Anmeldung: 11.10.2017
(73) Patentinhaber: Ditf Deutsche Institute Für Textil- Und Faserforschung Stuttgart, 73770 Denkendorf (DE)
(72) Erfinder: DAUNER, Martin, 73730 Esslingen (DE); HOSS, Martin, 73262 Reichenbach (DE); FÖRSTER, Egon, 76744 Wörth am Rhein (DE); MAIER, Gerhard, 80807 München (DE); BODE, Ralf, 23966 Wismar (DE)
(74) Vertreter: Patentanwälte Ruff, Wilhelm, Beier, Dauster & Partner mbB
(86) Internationale Anmeldenummer: PCT/EP2015/078384
(87) Internationale Veröffentlichungsnummer: WO 2016/087527

(56) Entgegenhaltungen:
- EP-A1- 0 837 168
- EP-A2- 0 780 504
- WO-A1-2004/106042
- DE-A1- 4 222 127
- DE-A1-102007 043 946

## Beschreibung

Die Erfindung betrifft ein Textilprodukt, ein Verfahren zur Herstellung des Textilproduktes sowie Verwendungen des Textilproduktes.

In der DE 42 22 127 A1 ist ein Polstermaterial zur Verwendung in Fahrzeugen offenbart. Das Polstermaterial ist herstellbar aus einem Gewebe, welches aus dreidimensional gekräuselten Polyesterfasern sowie wärmebindenden Fasern besteht. Die Polyesterfasern können unter anderem aus Polyethylenterephthalat, Polybutylenterephthalat, Polyethylennaphthalat oder Polycyclohexylendimethylterephthalat oder einem Copolymer davon gebildet sein. Die wärmebindenden Fasern können eine Kern-Mantel-Struktur besitzen, wobei der Kernbestandteil ein nichtelastomerer Polyester und der Mantelbestandteil ein niedriger schmelzendes Polyesterelastomer sein kann. Zur Herstellung des Polstermaterials werden die Fasern gemischt, zu einem Gewebe zusammengepresst und das Gewebe anschließend wärmegeformt.

Die EP 0 837 168 A1 offenbart ein Verfahren zur Herstellung einer Kissenstruktur. Das Verfahren sieht das Einbringen eines Faseraggregats in eine Formenwerkzeugkavität vor. Zur Herstellung des Faseraggregats werden Bindefasern mit Matrixfasern gemischt. Bei den Matrixfasern kann es sich unter anderem um Stapelfasern aus Polyester und bei den Bindefasern um Stapelfasern aus einem thermoplastischen Elastomer handeln. Dabei können die Bindefasern eine Kern-Mantel-Struktur besitzen.

In der EP 0 780 504 A2 wird ein Verfahren zur Herstellung eines porösen Sitzkissens unter Verwendung einer Mischung aus polymeren Matrixfasern und polymeren Bindefasern offenbart, wobei die Bindefasern einen niedrigeren Schmelzpunkt besitzen als die Matrixfasern.

Die DE 10 2007 043 946 A1 offenbart einen Faserverbund mit Hochleistungskunststofffasern und Bindefasern. Bei den Hochleistungskunststofffasern kann es sich unter anderem um Polyetherketonfasern und/oder Polyphenylensulfidfasern handeln. Als Bindefasern werden unter anderem Polyamidfasern genannt. Der Faserverbund weist eine schichtartige Anordnung der Fasern auf, wodurch eine Hauptorientierung der Fasern vorhanden ist, welche im Wesentlichen in einer Ebene liegt.

In der WO2004/106042 A1 ist ein Verfahren sowie eine Vorrichtung zur Herstellung von dreidimensional ausgeprägten Formteilen aus einem Fasermaterial offenbart. Bei dem Verfahren werden Fasern mittels eines Luftstroms in den Innenraum einer geschlossenen Form eingeblasen und mittels eines Bindemittels miteinander verbunden. Als Fasermaterialien werden Thermoplaste genannt und als Bindemittel Polypropylenfasern, Kunststofffasern oder Phenolharz.

Polyurethan(PUR)-Schäume sind technisch vielseitig verwendbare Werkstoffe. So stellen beispielsweise PUR-Weichschäume im Automobilbereich den gebräuchlichsten Werkstoff zur Herstellung von Formpolstern dar.

Die Herstellung von PUR-Schäumen erfolgt ausgehend von den Ausgangsrohstoffen Polyol, Diisocyanat sowie Zuschlagstoffe.

Obgleich es sich bei den PUR-Schäumen in der Zwischenzeit um etablierte Werkstoffe handelt, bleiben sie mit dem Nachteil behaftet, dass für ihre Herstellung Isocyanate verwendet werden müssen. Diese sind jedoch unter Herstellungs-, Lagerungs-, Verarbeitungs- und Transportgesichtspunkten als problematisch anzusehen. Ein besonderes Problem stellt die Ausdünstung von Monomeren bei erhöhten Temperaturen, wie sie üblicherweise bereits bei Sonneneinstrahlung auftreten, dar. Dies macht PUR-Schäume zu einem nicht unbedenklichen Werkstoff für den Menschen.

Es besteht mithin ein Bedarf an Ersatzwerkstoffen für PUR-Schäume. Problematisch hierbei ist jedoch, dass potenzielle Ersatzwerkstoffe - abhängig von der anvisierten Verwendung - bestimmten Anforderungsprofilen genügen müssen.

Ist beispielsweise eine Verwendung im Automobilbereich vorgesehen, ist eine möglichst hohe Druckelastizität bei erhöhten Beanspruchungstemperaturen gefordert. Zur Überprüfung einer solchen Druckelastizität wird der zu prüfende Werkstoff mittels eines in der Regel quaderförmigen Prüfkörpers bei einer Testprüftemperatur von 70 °C während eines Zeitraumes von 22 Stunden beaufschlagt. Im Falle eines faserförmigen Werkstoffes werden hierbei die Dicken des Prüfkörpers vor und nach der Prüfbeaufschlagung gemessen. Die gemessene Differenz wird als Druckverformungsrest bezeichnet. Für eine Verwendung im Automobilbereich, insbesondere zur Ausstattung von Fahrzeuginnenräumen, sollte der Druckverformungsrest kleiner 25% betragen. Mit anderen Worten ist eine wenigstens weitgehende Regeneration, das heißt elastische Rückstellung, des potenziellen Ersatzwerkstoffes erwünscht, sobald die Prüfbeaufschlagung weggenommen wird. Die bislang getesteten potenziellen faservliesbasierten Ersatzwerkstoffe erfüllen diese automobilspezifischen Anforderungen nicht.

Der vorliegenden Erfindung lag daher die Aufgabe zugrunde, ein Textilprodukt bereitzustellen, welches geeignet ist, PUR-Schäume zu substituieren und mithin die im Zusammenhang von PUR-Schäumen auftretenden Nachteile zu umgehen. Das Textilprodukt soll dabei insbesondere die für den Automobilbereich gültigen Anforderungen an einen PUR-Schaumersatzwerkstoff erfüllen.

Diese Aufgabe wird erfindungsgemäß gelöst durch ein Textilprodukt mit den Merkmalen des unabhängigen Anspruchs 1 sowie durch ein Verfahren mit den Merkmalen des unabhängigen Anspruchs 14. Bevorzugte Ausführungsformen sind in den abhängigen Ansprüchen 2 bis 13 und 15 definiert. Der Wortlaut sämtlicher Ansprüche wird hiermit durch ausdrückliche Bezugnahme zum Inhalt der vorliegenden Beschreibung gemacht.

Gemäß einem ersten Aspekt schlägt die Erfindung ein Textilprodukt vor, welches Trägerfasern und Bindefasern aufweist.

Das Textilprodukt zeichnet sich gegenüber gattungsgemäßen Textilprodukten besonders dadurch aus, dass die Trägerfasern ein Polymerblend mit einer Glasübergangstemperatur (T_{g}) > (gesprochen: größer) 75 °C aufweisen. Erfindungsgemäß kann es dabei insbesondere vorgesehen sein, dass die Trägerfasern aus einem solchen Polymerblend bestehen.

Überraschenderweise stellte sich heraus, dass ein Textilprodukt mit den oben genannten Merkmalen als Ersatzwerkstoff für PUR-Schäume, insbesondere PUR-Weichschäume, verwendet werden kann.

Insbesondere konnte festgestellt werden, dass ein solches Textilprodukt in der Lage ist, auch bei erhöhten Temperaturen, d.h. bei Temperaturen > 70 °C, stabile Rückstellkräfte (nach Wegfall einer Druckbeanspruchung) auszubilden, mithin der insbesondere im Automobilbereich geforderten, thermisch stabilen Druckelastizität zu entsprechen. In diesem Zusammenhang tragen die Bindefasern allgemein zur Ausbildung einer Druckelastizität bei, während die Trägerfasern aufgrund des erfindungsgemäß vorgesehenen Polymerblends mit einer Glasüberganstemperatur > 75 °C dazu beitragen, dass die Druckelastizität auch bei erhöhten Temperaturen, d.h. bei Temperaturen > 70 °C, stabil ist.

Ein weiterer Vorteil, welcher speziell mit den Bindefasern einhergeht, liegt darin, dass die Verwendung von zusätzlichen Bindemitteln verzichtbar ist. Erfindungsgemäß kann es daher durchaus vorgesehen sein, dass das Textilprodukt - abgesehen von den Bindefasern - kein Bindemittel aufweist.

Der Begriff "Trägerfaser" definiert im Sinne der vorliegenden Erfindung einen Fasertyp, welcher maßgeblich für die mechanische Festigkeit bzw. Stabilität des erfindungsgemäßen Textilproduktes verantwortlich ist. Erfindungsgemäß kann es sich bei den Trägerfasern um den Hauptfasertyp des Textilproduktes, d.h. um denjenigen Fasertyp handeln, welcher - über alle Fasertypen des Textilproduktes - den größten Anteil im Textilprodukt besitzt oder mit der höchsten Faseranzahl im Textilprodukt vertreten ist.

Der Begriff "Bindefaser" definiert im Sinne der vorliegenden Erfindung einen Fasertyp, mit welchem aufgrund seiner Löse- oder Schmelzeigenschaften, vorzugsweise Schmelzeigenschaften, Verbindungen, insbesondere Verklebungen, im erfindungsgemäßen Textilprodukt erzeugt werden können.

Der Begriff "Polymer" kann im Sinne der vorliegenden Erfindung sowohl ein Homopolymer als auch ein Copolymer, das heißt ein Polymer, welches aus wenigstens zwei verschiedenen Monomereinheiten zusammengesetzt ist, umfassen. Beispielsweise kann es sich bei einem Polymer im Sinne der vorliegenden Erfindung um ein statistisches Copolymer, alternierendes Copolymer oder Block-Copolymer bzw. segmentiertes Copolymer handeln.

Der Begriff "Polymerblend" bedeutet im Sinne der vorliegenden Erfindung eine Mischung aus wenigstens zwei verschiedenen Polymeren. Bei dem erfindungsgemäßen Polymerblend kann es sich beispielsweise um ein binäres, d.h. um ein aus zwei verschiedenen Polymeren zusammengesetztes, Polymerblend oder um ein ternäres, d.h. um ein aus drei verschiedenen Polymeren zusammengesetztes, Polymerblend handeln.

Der Begriff "Glasübergangstemperatur" entspricht der fachmännischen Definition und ist phänomenologisch durch die Umwandlung einer mehr oder weniger harten, amorphen glasartigen oder teilkristallinen Polymerprobe in eine gummiartige bis zähflüssige "Schmelze" gekennzeichnet. Ursächlich für das Phänomen der Glasübergangstemperatur ist das Einfrieren oder Auftauen der Brownschen Molekularbewegungen längerer Kettensegmente (20 bis 50 Kettenatome) von Polymeren. Vielfach handelt es sich dabei um trans/gauche-Umwandlungen, die kooperativ über größere Bereiche verlaufen. Die Makrokonformation ändert sich dagegen bei der Glasübergangstemperatur nicht. Beim Erreichen der Glasübergangstemperatur tritt eine drastische Änderung physikalischer Kerngrößen, wie beispielsweise der Härte, des Moduls und der thermodynamischen Zustandsgrößen Volumen, Enthalpie und Entropie, der Polymere ein. Bestimmt werden kann die Glasübergangstemperatur u. a. über thermisch-dilatometrische oder dynamisch-mechanische Messungen bzw. mit Hilfe der NMR-Spektroskopie.

Die im Rahmen der vorliegenden Erfindung angegebenen Glasübergangstemperaturen basieren auf der dynamischen Differenzkalorimetrie (differential scanning calorimetry DSC) als Methode zur Messung der Glasübergangstemperatur. Bevorzugt werden die im Rahmen der vorliegenden Erfindung angegebenen Glasübergangstemperaturen mittels dynamischer Differenzkalorimetrie gemessen, wobei für die DSC-Messungen die folgende Messbedingungen gewählt werden: 1. Aufheizung: von 20 °C auf 300 °C mit einer Aufheizrate von 10 K/min - Haltezeit: 3 min bei 300 °C - Abkühlung: von 300 °C auf 20 °C mit einer Abkühlrate von 10 K/min - Haltezeit: 3 min bei 20 °C - 2. Aufheizung von 20 °C auf 300 °C mit einer Aufheizrate von 10K/min. Während der gesamten Messung wurde mit Stickstoff gespült (50 ml/min).

Der Begriff "Druckelastizität" definiert im Sinne der vorliegenden Erfindung die Eigenschaft des Textilproduktes, reversibel auf einwirkende Drücke zu reagieren.

Bei dem Textilprodukt handelt es sich um ein Vlies bzw. Faservlies. Der Begriff "Vlies" bzw. "Faservlies" entspricht dabei der üblichen Definition für ein Vlies. Entsprechend soll unter dem Begriff "Vlies" bzw. "Faservlies" im Sinne der vorliegenden Erfindung ein Gebilde aus losen zusammenliegenden Fasern, welche noch nicht miteinander verbunden sind, verstanden werden. Die Festigkeit eines Vlieses beruht somit nur auf einer fasereigenen Haftung, welche jedoch erforderlichenfalls durch Avivagen beeinflusst werden kann.

Bei dem Textilprodukt kann es sich beispielsweise um ein mechanisch gebildetes Vlies, aerodynamisch gebildetes Vlies, hydrodynamisch gebildetes Vlies, Walkvlies, Nadelvlies, Wirbelvlies, Spunlaced-Vlies, Schmelz-Blas-Vlies (Melt-Blown-Vlies), Spinnvlies, orientiertes Vlies, Kreuzlagenvlies, Wirrfaservlies, durch Fasereinblasverfahren hergestelltes Vlies oder Wavemakervlies handeln.

Erfindungsgemäß kann es insbesondere bevorzugt sein, wenn es sich bei dem Textilprodukt um ein Wirrfaservlies, insbesondere um ein durch Fasereinblasverfahren hergestelltes Vlies, handelt. Das Wirrfaservlies stellt ein sogenanntes isotropes Vlies dar, d.h. ein Vlies, bei welchem die Fasern jede beliebige Richtung einnehmen können.

In einer möglichen Ausführungsform weist das Textilprodukt ein Vlies, insbesondere wie in den vorangegangenen Ausführungsformen beschrieben, auf.

Alternativ handelt es sich bei dem Textilprodukt um einen Vliesstoff, das heißt um ein verfestigtes, insbesondere chemisch, mechanisch und/oder thermisch verfestigtes, Vlies. Erfindungsgemäß besonders bevorzugt ist ein thermisch verfestigtes Vlies.

Beispielsweise kann es sich bei dem Textilprodukt um einen Walkvliesstoff, Nadelvliesstoff, Wirbelvliesstoff, Spunlaced-Vliesstoff, orientierten Vliesstoff, Kreuzlagenvliesstoff, Wirrfaservliesstoff, Schmelz-Blas-Vliesstoff (Melt-Blown-Vliesstoff), Spinnvliesstoff, Wavemakervliesstoff, Vliesnähwirkstoff, Maschenvlieswirkstoff, Polvlieswirkstoff oder einen nach dem Fasereinblasverfahren hergestellten Vliesstoff handeln.

Vorzugsweise handelt es sich bei dem Textilprodukt um einen Wirrfaser-Vliesstoff (isotroper Vliesstoff), insbesondere um einen Wavemakervliesstoff oder einen nach dem Fasereinblasverfahren hergestellten Vliesstoff.

In einer möglichen Ausführungsform weist das Textilprodukt einen Vliesstoff, insbesondere wie in den vorangegangenen Ausführungsformen beschrieben, auf.

Vorzugsweise weist das Textilprodukt ein Fasergemisch, insbesondere ein homogenes Fasergemisch, auf, welches die Trägerfasern und Bindefasern aufweist oder aus den Trägerfasern und Bindefasern besteht. Das Textilprodukt kann insbesondere in Form eines solchen Fasergemisches vorliegen. Mit anderen Worten ist es erfindungsgemäß bevorzugt, wenn die Trägerfasern und Bindefasern nicht räumlich voneinander getrennt vorliegen, insbesondere nicht in unterschiedlichen Schichten des Textilproduktes enthalten sind.

Grundsätzlich kann es sich bei den Träger- und/oder den Bindefasern um sogenannte Endlosfasern, das heißt sogenannte Filamente, und/oder um sogenannte Stapelfasern, das heißt abgelängte Endlosfasern, handeln. Mit anderen Worten kann es sich bei den erfindungsgemäß vorgesehenen Träger- und Bindefasern um Endlos- und/oder Stapelfasern handeln. Bevorzugt handelt es sich bei den Träger- und Bindefasern jedoch jeweils um Stapelfasern.

In einer weiteren Ausführungsform weist das Textilprodukt Bindestellen zwischen den Bindefasern und/oder zwischen den Träger- und den Bindefasern auf. Bevorzugt weist das Textilprodukt Bindestellen sowohl zwischen den Bindefasern als auch zwischen den Träger- und Bindefasern auf. Die Bindestellen sind in der Regel das Ergebnis einer Verfestigung, insbesondere einer mechanischen Verfestigung oder thermischen Verfestigung (sogenannte thermische Bondierung), des Textilproduktes. Bevorzugt sind die Bindestellen durch eine thermische Bondierung des Textilproduktes erzeugt. In diesem Fall handelt es sich bei den Bindestellen um Klebestellen, insbesondere Schmelzklebestellen. Eine thermische Bondierung hat den Vorteil, dass beispielsweise der Einsatz von Lösungsmitteln oder der Einsatz von zusätzlichen Bindemitteln nicht erforderlich ist, was wiederum zu einer Zeit- und somit Kostenersparnis führt.

Mit anderen Worten kann somit wenigstens ein Teil der Bindefasern und/oder wenigstens ein Teil der Träger- und Bindefasern miteinander verbunden, insbesondere mechanisch oder thermisch, vorzugsweise thermisch, miteinander verbunden sein. Bevorzugt sind wenigstens ein Teil der Bindefasern und/oder wenigstens ein Teil der Träger- und Bindefasern miteinander verklebt, vorzugsweise thermisch verklebt.

Für den Fall, dass das Textilprodukt Bindestellen zwischen den Träger- und den Bindefasern aufweist, ist es weiterhin bevorzugt, wenn an den Bindestellen die Trägerfasern von dem Material, in der Regel einem Polymer, der Bindefasern wenigstens teilweise, vorzugsweise vollständig, ummantelt sind.

In einer weiteren Ausführungsform besitzt das Textilprodukt eine dreidimensionale Faserstruktur, welche von den Träger- und Bindefasern gebildet ist.

Erfindungsgemäß kann es insbesondere vorgesehen sein, dass wenigstens ein Teil der Trägerfasern innerhalb einer von den Bindefasern gebildeten Faserstruktur vorliegt.

Die Trägerfasern weisen ein Polymerblend mit einer Glasübergangstemperatur > 75 °C, bevorzugt > 80 °C, auf. Bevorzugt weist das Polymerblend eine Glasübergangstemperatur auf, welche wenigstens 3 °C, bevorzugt mehr als 5 °C, insbesondere mehr als 10 °C, oberhalb der Glasübergangstemperatur einer Hauptkomponente des Polymerblends liegt. Der Ausdruck "Hauptkomponente" definiert an dieser Stelle ein Polymer des Polymerblends, welches, bezogen auf das Gesamtgewicht des Polymerblends, den größten Anteil (Gew.-%) besitzt. Die Trägerfasern weisen insbesondere ein Polymerblend mit einer Glasübergangstemperatur von 80 °C bis 300 °C, bevorzugt von 80 °C bis 160 °C, auf. Polymerblends mit den in diesem Absatz genannten Glasübergangstemperaturbereichen eignen sich in besonderer Weise zur Ausbildung einer thermisch stabilen Druckelastizität bei dem erfindungsgemäßen Textilprodukt.

In einer bevorzugten Ausführungsform handelt es sich bei dem Polymerblend um ein sogenanntes Polyethylenterephthalat-Polymerblend (PET-Polymerblend), d.h. um ein Polymerblend, welches Polyethylenterephthalat sowie wenigstens ein weiteres Polymer enthält. Bevorzugt stellt das Polyethylenterephthalat die Hauptkomponente des Polymerblends dar. Erfindungsgemäß kann es insbesondere vorgesehen sein, dass das Polyethylenterephthalat einen Anteil ≥ 50 Gew.-%, insbesondere > 50 Gew.-%, aufweist, bezogen auf das Gesamtgewicht des Polymerblends. Vorzugsweise weist das Polyethylenterephthalat einen Anteil von 50 Gew.-% bis 98 Gew.-%, insbesondere von mindestens 80 Gew.-%, bevorzugt von mindestens 88 Gew.-% bis 98 Gew.-%, auf, bezogen auf das Gesamtgewicht des Polymerblends.

Das wenigstens eine weitere Polymer weist in einer bevorzugten Ausführungsform einen Anteil von maximal 20 Gew.-%, insbesondere 2 Gew.-% bis 12 Gew.-%, auf, bezogen auf das Gesamtgewicht des PET-Polymerblends.

Das wenigstens eine weitere Polymer besitzt in einer zweckdienlichen Ausführungsform eine höhere Glasübergangstemperatur als Polyethylenterephthalat (PET).

In einer weiteren Ausführungsform handelt es sich bei dem wenigstens einen weiteren Polymer um ein amorphes Polymer.

In einer weiteren Ausführungsform ist das wenigstens eine weitere Polymer ausgewählt aus der Gruppe bestehend aus thermoplastische Polycarbonate, Polyamide, Polyetherimide, Polysulfone, Polyethersulfone, Polyphenylsulfone und Mischungen davon.

Ein geeignetes thermoplastisches Polycarbonat stellt beispielsweise das unter der Bezeichnung Apec® HT KU 1-9340 kommerziell erhältliche Produkt dar. Hierbei handelt es sich um ein thermoplastisches Polycarbonat mit einer Glasübergangstemperatur von 195 °C.

Ein geeignetes Polyamid stellt beispielsweise das unter der Bezeichnung Grilamid TR® kommerziell erhältliche Produkt dar. Hierbei handelt es sich um ein transparentes, thermoplastisch verarbeitbares, amorphes Polyamid auf der Basis cycloaliphatischer und aromatischer Bausteine. Dieses Polyamid besitzt eine Glasübergangstemperatur von 190 °C.

Ein geeignetes Polyetherimid stellt beispielsweise das unter der Bezeichnung ULTEM™ Resin 1010 kommerziell erhältliche Produkt dar. Hierbei handelt es sich um ein amorphes, transparentes Polyetherimid mit einer Glasübergangstemperatur von 217 °C.

Ein geeignetes Polysulfon stellt beispielsweise das unter der Bezeichnung Ultrason® S 6010 NAT kommerziell erhältliche Produkt dar. Hierbei handelt es sich um ein Polysulfon mit einer Glasübergangstemperatur von 187 °C.

Ein geeignetes Polyethersulfon stellt beispielsweise das unter der Bezeichnung Ultrason® E 6020 P kommerziell erhältliche Produkt dar. Hierbei handelt es sich um ein Polyethersulfon mit einer Glasübergangstemperatur von 225 °C.

Ein geeignetes Polyphenylsulfon stellt beispielsweise das unter der Bezeichnung Radel® R-5000 kommerziell erhältliche Produkt dar. Hierbei handelt es sich um ein transparentes Polyphenylsulfon mit einer Glasübergangstemperatur von 220 °C.

Bei den Bindefasern handelt es sich gemäß einer besonders bevorzugten Ausführungsform um Klebefasern, insbesondere Schmelzklebefasern.

Bevorzugt weisen die Bindefasern ein thermoplastisches Polymer, insbesondere ein thermoplastisches Elastomer, auf oder bestehen aus einem solchen Polymer, insbesondere Elastomer. Durch derartige Bindefasern lässt sich besonders wirkungsvoll ein druckelastisches Verhalten bei dem erfindungsgemäßen Textilprodukt implementieren.

Zweckmäßigerweise besitzt das thermoplastische Polymer der Bindefasern einen niedrigeren Schmelzpunkt als das Polymer der Trägerfasern. Bevorzugt weist das Polymer der Bindefasern einen Schmelzpunkt von 100 °C bis 250 °C, insbesondere 130 °C bis 220 °C, vorzugsweise 160 °C bis 220 °C, auf. Thermoplastische Polymere mit den in diesem Absatz genannten Schmelzpunktbereichen eignen sich besonders für die Durchführung einer unter technischen sowie wirtschaftlichen Gesichtspunkten tragfähigen Thermobondierung der Bindefasern.

In einer bevorzugten Ausführungsform weist auch das thermoplastische Polymer eine Glasübergangstemperatur (Tg) > 70 °C auf. Erfindungsgemäß kann es insbesondere vorgesehen sein, dass auch das thermoplastische Polymer eine Glasübergangstemperatur ≥ 75 °C, insbesondere > 75 °C, bevorzugt > 80 °C, aufweist. Das thermoplastische Polymer weist insbesondere eine Glasübergangstemperatur von 75 °C bis 300 °C, bevorzugt 80 °C bis 300 °C, besonders bevorzugt 85 °C bis 160 °C, auf. Durch Verwendung von thermoplastischen Polymeren mit den in diesem Absatz genannten Glasübergangstemperaturbereichen kann die Ausbildung einer auch bei erhöhten Temperaturen stabilen Druckelastizität des Textilproduktes zusätzlich verstärkt werden.

Vorzugsweise ist das thermoplastische Polymer ausgewählt aus der Gruppe umfassend Polyester, Copolyester, thermoplastische Polyester-Elastomere, thermoplastische Polyester auf Olefinbasis, Styrol-Triblock-Copolymere wie Styrol-Ethylen-Butylen-Styrol-Copolymer, Polyamide wie Polyamid 12 und Mischungen (Polymerblends) davon.

In einer weiteren Ausführungsform handelt es sich bei den Bindefasern um Mehrkomponentenfasern, insbesondere Bikomponentenfasern.

Bevorzugt weisen die Bindefasern einen Kern-Mantel-Aufbau auf. Derartige Bindefasern haben den Vorteil, dass sie imstande sind, netzförmige Strukturen auszubilden, was wiederum vorteilhaft ist im Hinblick auf die Ausbildung eines druckelastischen Verhaltens bei dem erfindungsgemäßen Textilprodukt.

Bevorzugt weist der Kern ein Polymer/Polymerblend auf oder besteht aus einem Polymer/Polymerblend, welches der Kern-Mantel-Faser eine mechanische Stabilität und insbesondere Steifheit verleiht. Erfindungsgemäß kann es beispielsweise vorgesehen sein, dass wenigstens der Kern ein faserbildendes Polymer/Polymerblend aufweist oder aus einem solchen Polymer/Polymerblend besteht. Dies hat den Vorteil, dass der Mantel grundsätzlich auch ein schlecht faserbildendes, insbesondere schlecht ausspinnbares, Polymer aufweisen oder aus einem solchen Polymer bestehen kann. Geeignete Polymere/Polymerblends für den Kern können ausgewählt sein aus der Gruppe bestehend aus Polyester, Polyethylennaphthalat, Polyphenylensulfid, Polycyclohexandimethylenterephthalat, 2,5-Furandicarboxylat-Einheiten enthaltende Polyester wie Polyethylenfuranoat, Polyacrylnitril, insbesondere oxidiertes Polyacrylnitril, Polyetherketon (PEK) und Copolymere davon und Mischungen (Polymerblends) davon. Besonders geeignete Polymerblends stellen PET-Polymerblends dar. Bezüglich PET-Polymerblends wird auf die im Zusammenhang der Trägerfasern genannten PET-Polymerblends verwiesen.

Der Mantel weist vorzugsweise ein thermoplastisches Polymer, insbesondere ein thermoplastisches Elastomer, auf oder besteht aus einem solchen Polymer, insbesondere Elastomer. Insoweit wird auf die im Zusammenhang der Bindefasern erwähnten Polymere Bezug genommen.

Der Mantel weist in einer weiteren Ausführungsform einen Anteil von 20 Vol.-% bis 50 Vol.-%, bevorzugt 25 Vol.-% bis 35 Vol.-%, auf, bezogen auf das Gesamtvolumen einer einzelnen Bindefaser.

In einer unter mechanischen Stabilitätsgesichtspunkten vorteilhaften Ausführungsform ist die Anzahl der Trägerfasern größer als die Anzahl der Bindefasern. Beispielsweise kann das Textilprodukt ein Verhältnis (in %) von Trägerfasern zu Bindefasern von 80:20 bis 70:30 aufweisen.

In einer möglichen Ausführungsform weist das Textilprodukt ein Verhältnis (in %) von Trägerfasern zu Bindefasern von 50:50 auf.

In einer weiteren Ausführungsform weisen die Trägerfasern einen Anteil von 30 Gew.-% bis 90 Gew.-%, insbesondere 50 Gew.-% bis 85 Gew.-%, bevorzugt 60 Gew.-% bis 80 Gew.-%, auf, bezogen auf das Gesamtgewicht des Textilproduktes.

Um die Festigkeits- und Dehneigenschaften des erfindungsgemäßen Textilproduktes zusätzlich zu verbessern, ist es in einer weiteren Ausführungsform vorgesehen, dass die Trägerfasern und/oder die Bindefasern, vorzugsweise die Trägerfasern und die Bindefasern, wenigstens teilweise, vorzugsweise vollständig, verstreckt vorliegen.

Um die Ausbildung eines druckelastischen Verhaltens bei dem erfindungsgemäßen Textilprodukt zusätzlich zu verbessern, ist es in einer weiteren Ausführungsform vorgesehen, dass die Trägerfasern und/oder die Bindefasern, vorzugsweise die Trägerfasern und die Bindefasern, wenigstens teilweise, vorzugsweise vollständig, gekräuselt vorliegen bzw. mit einer Kräuselung versehen sind.

Unter wirtschaftlichen Gesichtspunkten kann es weiterhin vorteilhaft sein, wenn die Trägerfasern und/oder die Bindefasern einen möglichst geringen Titer besitzen. Bevorzugt besitzen die Träger- und/oder die Bindefasern einen Titer von 1 dtex bis 100 dtex, insbesondere 3 dtex bis 70 dtex, bevorzugt 6 dtex bis 50 dtex.

Wie bereits erwähnt, kann es erfindungsgemäß vorgesehen sein, dass es sich bei den Fasern des Textilproduktes um Stapelfasern handelt. Dementsprechend können die Träger- und/oder die Bindefasern beispielsweise eine Länge von 40 mm bis 150 mm, bevorzugt 60 mm bis 90 mm, aufweisen.

Das Textilprodukt weist ein Porenvolumen von 40% bis 90% auf, bezogen auf das Gesamtvolumen des Textilproduktes. Dies bewirkt eine erhöhte Luftdurchlässigkeit, was abhängig von der beabsichtigten Verwendung des Textilproduktes vorteilhaft sein kann. Ist das Textilprodukt beispielsweise zur Herstellung eines Sitzpolsters für ein Automobil vorgesehen, führt eine hohe Luftdurchlässigkeit des Textilproduktes zu einer deutlichen Erhöhung des Sitzkomforts.

Das Textilprodukt weist ein Raumgewicht von 10 kg/m³ bis 100 kg/m³, insbesondere 15 kg/m³ bis 50 kg/m³, bevorzugt 20 kg/m³ bis 40 kg/m³, auf.

Die im vorherigen Absatz genannten niedrigen Raumgewichte haben gegenüber gattungsgemäßen Textilprodukten den Vorteil einer signifikanten Masseneinsparung, was insbesondere im Automobilbereich den weitergehenden Vorteil eines verringerten Kraftstoffverbrauchs miteinschließt.

In einer weiteren Ausführungsform sind die Träger- und/oder die Bindefasern mit wenigstens einem Additiv versehen. Bei dem wenigstens einen Additiv kann es sich beispielsweise um einen Farbstoff handeln.

Das Textilprodukt besteht in einer weiteren Ausführungsform aus den Träger- und den Bindefasern.

In einer weiteren Ausführungsform handelt es sich bei dem Textilprodukt um ein Faserformteil, bevorzugt für den Kraftfahrzeug-, Schienenfahrzeug- und/oder Luftfahrzeugbereich, besonders bevorzugt für den Automobilbereich.

Das Faserformteil ist vorzugsweise ein dreidimensionales Faserformteil, insbesondere in Form eines Polstervlieses.

Zum Beispiel kann es sich bei dem Faserformteil um ein Polster, insbesondere Sitzpolster, Armlehnpolster, Rückenpolster, Kopfstützpolster oder Sitzrückenlehnpolster, bevorzugt für Automobile, handeln.

Des Weiteren kann es sich bei dem Faserformteil um ein Matratzenpolster handeln.

Weiterhin kann es sich bei dem Faserformteil um einen BH-Formfüllstoff handeln.

Gemäß einem zweiten Aspekt betrifft die Erfindung ein Verfahren zur Herstellung eines Textilproduktes, insbesondere eines Textilproduktes gemäß erstem Erfindungsaspekt. Das Verfahren umfasst die folgenden Schritte:
- Bereitstellen von Trägerfasern und Bindefasern und
- Verarbeiten der Trägerfasern und Bindefasern zu einem Textilprodukt.

Das Verfahren zeichnet sich besonders dadurch aus, dass die Trägerfasern ein Polymerblend mit einer Glasübergangstemperatur > 75 °C aufweisen.

In einer bevorzugten Ausführungsform werden die Träger- und Bindefasern durch Ausspinnen bereitgestellt.

Grundsätzlich können die Träger- und/oder Binderfasern in Form von Endlosfasern bereitgestellt werden. Erfindungsgemäß bevorzugt ist es, wenn die Träger- und/oder Bindefasern vor dem Verarbeiten zu dem Textilprodukt zu Stapelfasern abgelängt werden.

Vorzugsweise werden die Träger- und Bindefasern zu einem verfestigten, insbesondere chemisch, mechanisch und/oder thermisch verfestigten, Textilprodukt verarbeitet. Bevorzugt werden die Träger- und Bindefasern zu einem thermisch verfestigtem Textilprodukt verarbeitet. Mit anderen Worten ist es bevorzugt, wenn die Träger- und Bindefasern durch Wärmezufuhr zu einem verfestigten Textilprodukt verarbeitet werden.

In einer weitergehenden Ausführungsform werden die Träger- und Bindefasern zunächst zu einem unverfestigten Textilprodukt verarbeitet, welches anschließend einer Verfestigung insbesondere chemischen, mechanischen und/oder thermischen Verfestigung unterworfen wird. Bevorzugt wird das unverfestigte Textilprodukt durch eine thermische Verfestigung, d.h. eine sogenannte thermische Bondierung, verfestigt. Die Verfestigung des Textilproduktes beruht vorzugsweise auf Verbindungen, insbesondere Verklebungen, zwischen den Bindefasern und/oder zwischen den Träger- und den Bindefasern auf. Bevorzugt beruht die Verfestigung des Textilproduktes auf Verbindungen, insbesondere Verklebungen, sowohl zwischen den Bindefasern als auch zwischen den Träger- und Bindefasern.

Die Träger- und Bindefasern werden in einer weiteren Ausführungsform ohne ein zusätzliches Bindemittel zu dem Textilprodukt verarbeitet. Mit anderen Worten kann es erfindungsgemäß bevorzugt sein, dass beim Verarbeiten der Träger- und Bindefasern zum Textilprodukt - abgesehen von den Binderfasern - kein zusätzliches Bindemittel eingesetzt wird.

Vorzugsweise werden die Träger- und Bindefasern zu einem Vlies insbesondere Vliesstoff, verarbeitet.

Das Verarbeiten der Träger- und Bindefasern zum Textilprodukt umfasst in einer weitergehenden Ausführungsform die folgenden Schritte:
- Legen der Träger- und Bindefasern zu einem Vlies
- Verfestigen, vorzugsweise thermisches Verfestigen, des gelegten Vlieses unter Ausbildung eines Vliesstoffes.

In einer bevorzugten Ausführungsform werden die Träger- und Bindefasern mittels eines Einblasverfahrens zu einem vliesförmigen, insbesondere vliesstoffförmigen, Textilprodukt verarbeitet. Das Einblasverfahren umfasst vorzugsweise die folgenden Schritte:
- Einblasen der Träger- und Bindefasern mittels einem Luftstroms in den Innenraum eines zweiteiligen, geschlossenen Hohlwerkzeuges, welches eine Unterform, deren Innenseite die Kontur der Unterseite des Textilproduktes bestimmt, und eine Oberform, deren Innenseite die Kontur der Oberseite des Textilproduktes bestimmt, umfasst, wobei die Unter- und/oder Oberform Löcher zum Durchströmen von Luft aufweisen,
- Anlagern der Träger- und Bindefasern an den Innenseiten der Unterform und der Oberform bis das Hohlwerkzeug gefüllt ist, wodurch sich ein Vlies aus den Träger- und Bindefasern bildet und vorzugsweise
- Verfestigen des Vlieses, vorzugsweise durch Wärmezufuhr.

Bezüglich weiterer Merkmale und Vorteile des in der vorliegenden Beschreibung erwähnten und beschriebenen Fasereinblasverfahrens sei auf die WO 2004/106042 A1 verwiesen, deren Offenbarungsgehalt bezüglich des dort beschriebenen Verfahrens zur Herstellung von dreidimensionalen, ausgeprägten Formteilen durch ausdrückliche Bezugnahme zum Inhalt der vorliegenden Beschreibung gemacht wird.

In einer alternativen Ausführungsform werden die Träger- und Bindefasern mittels des sogenannten Wavemaker-Verfahrens zu einem vliesförmigen, insbesondere vliesstoffförmigen, Textilprodukt verarbeitet. Bei diesem Verfahren werden die Träger- und Bindefasern zunächst mittels einer Krempel zu einem Vlies gelegt. Das Vlies wird danach einer Formwalze mit Zahngarnituren zur Ausrichtung der Vliesfasern zugeführt. Die Formwalze wird auch als Wellenbildungsaggregat bzw. Vertikalleger bezeichnet. Das Vlies kann dabei über einen Kreuzleger oder direkt der Formwalze zugeführt werden. Nach Ausrichtung der Vliesfasern durch die Formwalze wird das Vlies vorzugsweise thermisch befestigt. Hierzu kann das Vlies in einem Thermobond-Durchluftofen überführt werden, in welchem die Bindefasern aufgeschmolzen werden, wodurch Bindestellen zwischen den Bindefasern und/oder Träger- und Bindefasern, vorzugsweise sowohl zwischen den Bindefasern als auch zwischen den Träger- und Bindefasern, entstehen. Nach Abkühlen wird ein verfestigtes vliesstoffförmiges Textilprodukt erhalten.

Bezüglich weiterer Merkmale und Vorteile des Verfahrens, insbesondere des Textilproduktes, der Trägerfasern sowie der Bindefasern, wird vollständig auf die im Rahmen des ersten Erfindungsaspektes gemachten Ausführungen Bezug genommen. Die dort beschriebenen Merkmale und Vorteile des Textilproduktes, der Trägerfasern sowie der Bindefasern gelten sinngemäß auch für das erfindungsgemäße Verfahren.

Gemäß einem dritten Aspekt betrifft die Erfindung die Verwendung des erfindungsgemäßen Textilproduktes zur Herstellung von textilen Gegenständen, bevorzugt Interieur-Textilien, semi-technischen Textilien, technischen Textilien, Heimtextilien, Kleidung und/oder medizintechnischen Textilien.

Bezüglich weiterer Merkmale und Vorteile des Textilproduktes wird vollständig auf die bisherige Beschreibung Bezug genommen. Die dort beschriebenen Merkmale und Vorteile des Textilproduktes, der Trägerfasern sowie der Bindefasern gelten sinngemäß auch für die erfindungsgemäße Verwendung.

Weitere Merkmale und Vorteile der Erfindung ergeben sich aus der nachfolgenden Beschreibung von bevorzugten Ausführungsformen anhand von Ausführungsbeispielen sowie der Unteransprüche. Dabei können einzelne Merkmale der Erfindung für sich alleine oder zu mehreren in Kombination miteinander verwirklicht sein. Die bevorzugten Ausführungsformen dienen lediglich der Erläuterung der Erfindung, die in keiner Weise darauf beschränkt sein soll.

### Figurenkurzbeschreibung

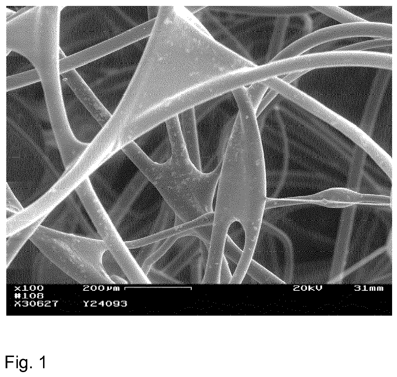

Fig. 1 zeigt eine REM-Aufnahme, welche einen Ausschnitt aus einem nicht erfindungsgemäßen Textilprodukt wiedergibt.

### Beispielteil

Zur Herstellung eines dreidimensionalen Faserformteils wurden zwei unterschiedliche Fasertypen, nämlich Trägerfasern und Bindefasern, verwendet. Beide Fasertypen wurden in unterschiedlichen Anteilen gemeinsam zum Faserformteil verarbeitet. Als Trägerfasern wurden gecrimpte Stapelfasern aus Polyethylenterephthalat oder aus einem PET-Blend eingesetzt. Die Bindefasern bestanden aus einer Kern-Mantel-Faser, deren Kern aus einem PET-Blend und deren Mantel aus einem Schmelzkleber (Polyamid 12) bestanden. Die eingesetzten PET-Blends wurden durch Blenden mit anderen Polymeren derart modifiziert, dass die Glasübergangstemperatur von 75 °C zu höheren Temperaturen verschoben wurde. Nähere Angaben zu den gewählten Blendpartner für das PET sind in untenstehender Tabelle 1 wiedergegeben:

**Tabelle 1: Angaben zu den Blendpartnern für das PET-Blend**

| Komponente Nr. | 1 | 2 | 3 | 4 |
|---|---|---|---|---|
| Bezeichnung | PET | APEC-HT | PES | PEI |
| Handelsname | Polyclear PET 1101 | APEC-HT KU9340 | Ultrason E 6020P | Ultem 1010 |
| Hersteller | Invista | BAYER Materials Science AG | BASF SE | SABIC's Innovative Plastics |
| Trockendauer [h] | 10 | 10 | 10 | 10 |
| Trockentemperatur [°C] | 140 | 140 | 140 | 140 |
| Materialform | GN | GN | GN | GN |
| Intrinsische Viskosität [dL/g] | 0,79 - 0,85 | | 0,82 | |
| Dichte [g/mL] | 1,39 - 1,41 | 1,17 | | 1,27 |
| Glasübergangstemperatur [°C] | 75 °C | 195 | 225 | 217 |
| Schmelzpunkt [°C] | 270 | | | |
| MFR / MVR | | 15 | | 17,8 |
| (T [°C]; m [kg]) [mL/10min] | | (330; 2,16) | | (337; 6,6) |

Die hierdurch erzielten T_{g}-Erhöhungen sind in untenstehender Tabelle 2 wiedergegeben.

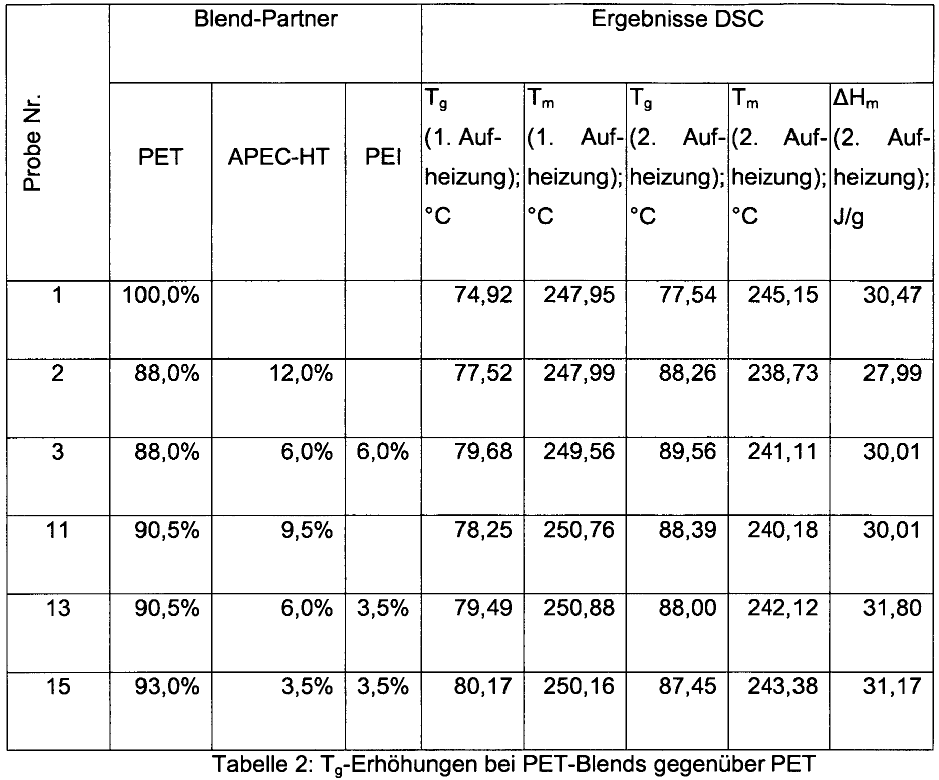

Die in der Tabelle 2 aufgeführten T_{g}-Werte sind das Ergebnis von DSC-Messungen nach den folgenden Messbedingungen: 1. Aufheizung: von 20 °C auf 300 °C mit einer Aufheizrate von 10 K/min - Haltezeit: 3 min bei 300 °C - Abkühlung: von 300 °C auf 20 °C mit einer Abkühlrate von 10 K/min - Haltezeit: 3 min bei 20 °C - 2. Aufheizung von 20 °C auf 300 °C mit einer Aufheizrate von 10K/min. Während der gesamten Messung wurde mit Stickstoff gespült (50 ml/min).

### 1. Herstellung der Kern-Mantel-Bindefasern:

Vor der Verarbeitung wurden die Polymere getrennt in einem Trockner bei Vakuum und erhöhter Temperatur (80 °C bis 120 °C) getrocknet, um den Wassergehalt zu minimieren. Die Trocknungsdauer betrug 12 Stunden. Das Ausspinnen erfolgte auf einer Bikomponenten-Spinnanlage, welche aus zwei Reimotec-RH 27-1-25-25D-Extrudern bestand. Die Anlage war mit einem einstelligen Spinnkopf ausgerüstet und besaß Zahnraddosierpumpen zur exakten volumetrischen Materialdosierung. Die Dosierpumpen hatten üblicherweise eine Förderkapazität von 0.6 ccm/Umdrehung. Im Betrieb wurde ein Materialverhältnis Kern : Mantel von 50 : 50 ausgewählt. Die Drehzahl der Spinnpumpen betrug bei beiden Polymeren 30 Umdrehungen pro Minute. Die Extruder liefen mit Drehzahlen von 10 bis 12 Umdrehungen pro Minute. Die Spinntemperatur im Spinnkopf betrug 293 °C. Dabei stellten sich Drücke von 22 bar im Mantel und 40 bar im Kern ein. Die ausgesponnene Faser wurde nach dem Durchlaufen einer Kühlzone mit Avivage versehen und bei 800 m/min aufgespult. Anschließend erfolgte die Verstreckung der Faser.

### 2. Herstellung des dreidimensionalen Faserformteils (nicht erfindungsgemäß):

Die Bindefaser wurde mit einem Schneidkonverter in 60 mm lange Stapelfasern geschnitten. Diese Stapelfasern wurden gemeinsam mit den Trägerfasern aus Polyphenylensulfid in ein Hohlwerkzeug eingeblasen. Es entstand eine homogene Mischung beider Fasertypen als Wirrvlies. Dieses Konstrukt wurde durch Erhitzen im Ofen thermisch aktiviert. Dabei schmolz der leicht fließende Schmelzkleber (Polyamid 12) auf und bildete an allen Fokalpunkten mit anderen Fasern eine Klebeverbindung (siehe Fig. 1).

## Patentansprüche

1. Textilprodukt, aufweisend Trägerfasern und Bindefasern, **dadurch gekennzeichnet, dass** die Trägerfasern ein Polymerblend mit einer Glasübergangstemperatur > 75 °C aufweisen, es sich bei dem Textilprodukt um ein Vlies oder einen Vliesstoff handelt, das Textilprodukt ein Porenvolumen von 40 % bis 90 % aufweist, bezogen auf das Gesamtvolumen des Textilprodukts, und das Textilprodukt ein Raumgewicht von 10 kg/m³ bis 100 kg/m³ aufweist.

2. Textilprodukt nach Anspruch 1, **dadurch gekennzeichnet, dass** es sich bei dem Textilprodukt um ein Wirrfaser-Vliesstoff, insbesondere um ein Melt-Blown-Vliesstoff oder ein Spinnvliesstoff, handelt.

3. Textilprodukt nach Anspruch 1 oder 2, **dadurch gekennzeichnet, dass** das Textilprodukt ein Fasergemisch, insbesondere ein homogenes Fasergemisch, aus den Trägerfasern und Bindefasern aufweist.

4. Textilprodukt nach einem der vorhergehenden Ansprüche, **dadurch gekennzeichnet, dass** das Polymerblend eine Glasübergangstemperatur aufweist, welche wenigstens 3°C, bevorzugt mehr als 5°C, insbesondere mehr als 10°C, oberhalb der Glasübergangstemperatur einer Hauptkomponente des Polymerblends liegt.

5. Textilprodukt nach einem der vorhergehenden Ansprüche, **dadurch gekennzeichnet, dass** das Polymerblend eine Glasübergangstemperatur von 80 °C bis 300 °C, bevorzugt 85 °C bis 160 °C, aufweist.

6. Textilprodukt nach einem der vorhergehenden Ansprüche, **dadurch gekennzeichnet, dass** es sich bei dem Polymerblend um ein PET-Blend handelt.

7. Textilprodukt nach Anspruch 6, **dadurch gekennzeichnet, dass** das PET-Blend wenigstens ein weiteres Polymer enthält, welches ausgewählt ist aus der Gruppe umfassend thermoplastische Polycarbonate, Polyamide, Polyetherimide, Polysulfone, Polyethersulfone, Polyphenylsulfone und Mischungen davon.

8. Textilprodukt nach einem der vorhergehenden Ansprüche, **dadurch gekennzeichnet, dass** die Bindefasern ein thermoplastisches Polymer, insbesondere thermoplastisches Elastomer, aufweisen.

9. Textilprodukt nach Anspruch 8, **dadurch gekennzeichnet, dass** das thermoplastische Polymer eine Glasübergangstemperatur > 70 °C bis 160 °C aufweist.

10. Textilprodukt nach 8 oder 9, **dadurch gekennzeichnet, dass** das thermoplastische Polymer ausgewählt ist aus der Gruppe umfassend Polyester, Copolyester, thermoplastische Polyester-Elastomere, thermoplastische Polyester auf Olefinbasis, Styrol-Triblock-Copolymere wie Styrol-Ethylen-Butylen-Styrol-Copolymer, Polyamide wie Polyamid 12, thermoplastische Polycarbonate und Mischungen davon.

11. Textilprodukt nach einem der vorhergehenden Ansprüche, **dadurch gekennzeichnet, dass** es sich bei den Bindefasern um Mehrkomponentenfasern handelt, wobei vorzugsweise die Bindefasern einen Kern-Mantel-Aufbau besitzen, wobei der Mantel ein thermoplastisches Polymer, insbesondere ein thermoplastisches Elastomer, aufweist

12. Textilprodukt nach einem der vorhergehenden Ansprüche, **dadurch gekennzeichnet, dass** das Textilprodukt ein Porenvolumen von 60% bis 90% aufweist, bezogen auf das Gesamtvolumen des Textilproduktes.

13. Textilprodukt nach einem der vorhergehenden Ansprüche, **dadurch gekennzeichnet, dass** es sich bei dem Textilprodukt um ein Faserformteil, insbesondere dreidimensionales Faserformteil, bevorzugt für den Kraftfahrzeug-, Schienenfahrzeug und/oder Luftfahrzeugbereich, besonders bevorzugt für den Automobilbereich, handelt.

14. Verfahren zur Herstellung eines Textilproduktes nach einem der vorhergehenden Ansprüche, umfassend die Schritte:
- Bereitstellen von Träger- und Bindefasern und
- Verarbeiten der Träger- und Bindefasern zu einem Textilprodukt,
**dadurch gekennzeichnet, dass** die Trägerfasern ein Polymerblend mit einer Glasübergangstemperatur > 75 °C aufweisen.

15. Verwendung eines Textilproduktes nach einem der Ansprüche 1 bis 13 zur Herstellung von textilen Gegenständen, bevorzugt Interieur-Textilien, semi-technischen Textilien, technischen Textilien, Heimtextilien, Kleidung und/oder medizintechnischen Textilien.

## Claims

1. Textile product, comprising carrier fibres and binding fibres, **characterized in that** the carrier fibres include a polymer blend having a glass transition temperature > 75 °C, the textile product is a non-woven or a non-woven fabric, the textile product has a pore volume of 40 % to 90 %, related to the total volume of the textile product, and the textile product has a bulk density of 10 kg/m³ to 100 kg/m³.

2. Textile product according to claim 1, **characterized in that** the textile product is a random laid non-woven fabric, in particular a melt-blown non-woven fabric or a spunbonded (spunlaid) non-woven fabric.

3. Textile product according to claim 1 or 2, **characterized in that** the textile product includes a fibre mixture, in particular a homogeneous fibre mixture, composed of the carrier fibres and binding fibres.

4. Textile product according to any of the preceding claims, **characterized in that** the polymer blend has a glass transition temperature which is at least 3 °C, preferably more than 5 °C, in particular more than 10 °C, above the glass transition temperature of a main component of the polymer blend.

5. Textile product according to any of the preceding claims, **characterized in that** the polymer blend has a glass transition temperature of 80 °C to 300 °C, preferably 85 °C to 160 °C.

6. Textile product according to any of the preceding claims, **characterized in that** the polymer blend is a PET blend.

7. Textile product according to claim 6, **characterized in that** the PET blend includes at least one further polymer which is selected from the group comprising thermoplastic polycarbonates, polyamides, polyetherimides, polysulfones, polyethersulfones, polyphenylsulfones and mixtures thereof.

8. Textile product according to any of the preceding claims, **characterized in that** the binding fibres include a thermoplastic polymer, in particular thermoplastic elastomer.

9. Textile product according to claim 8, **characterized in that** the thermoplastic polymer has a glass transition temperature > 70 °C to 160 °C.

10. Textile product according to claim 8 or 9, **characterized in that** the thermoplastic polymer is selected from the group comprising polyesters, copolyesters, thermoplastic polyester elastomers, olefin-based thermoplastic polyesters, styrene triblock copolymers like styrene-ethylene-butylene-styrene copolymer, polyamides like polyamide 12, thermoplastic polycarbonates and mixtures thereof.

11. Textile product according to any of the preceding claims, **characterized in that** the binding fibres are multicomponent fibres, wherein preferably the binding fibres have a core-sheath structure, wherein the sheath includes a thermoplastic polymer, in particular a thermoplastic elastomer.

12. Textile product according to any of the preceding claims, **characterized in that** the textile product has a pore volume of 60 % to 90 %, related to the total volume of the textile product.

13. Textile product according to any of the preceding claims, **characterized in that** the textile product is a fibre moulded part, in particular a three-dimensional fibre moulded part, preferably for the field of automotive vehicles, railway vehicles and/or aircrafts, particularly preferred for the field of automobiles.

14. Method for producing a textile product according to any of the preceding claims, comprising the steps:
- providing carrier fibres and binding fibres, and
- processing the carrier fibres and binding fibres to a textile product,
**characterized in that** the carrier fibres include a polymer blend having a glass transition temperature > 75 °C.

15. Use of a textile product according to any of the claims 1 to 13 for producing textile products, preferably interior textiles, semi-technical textiles, technical textiles, home textiles, clothing and/or medical-technical textiles.

## Revendications

1. Produit textile, comportant des fibres de support et des fibres de liage, **caractérisé en ce que** les fibres de support comportent un alliage de polymères ayant une température de transition vitreuse > 75 °C, pour ce qui est du produit textile il s'agit d'un voile ou d'un non-tissé, le produit textile présente un volume de pores de 40 % à 90 %, par rapport au volume total du produit textile, et le produit textile présente une masse volumique de 10 kg/m³ à 100 kg/m³.

2. Produit textile selon la revendication 1, **caractérisé en ce que** pour ce qui est du produit textile il s'agit d'un non-tissé de fibres enchevêtrées, en particulier d'un non-tissé obtenu par soufflage à l'état fondu (meltblown) ou d'un non-tissé obtenu par voie fondue directe (spunbond).

3. Produit textile selon la revendication 1 ou 2, **caractérisé en ce que** le produit textile comporte un mélange de fibres, en particulier un mélange de fibres homogène, à base des fibres de support et fibres de liage.

4. Produit textile selon l'une quelconque des revendications précédentes, **caractérisé en ce que** l'alliage de polymères présente une température de transition vitreuse qui se situe au moins à 3°C, de préférence à plus de 5°C, en particulier à plus de 10°C, au-dessus de la température de transition vitreuse d'un composant principal de l'alliage de polymères.

5. Produit textile selon l'une quelconque des revendications précédentes, **caractérisé en ce que** l'alliage de polymères présente une température de transition vitreuse de 80 °C à 300 °C, de préférence de 85°C à 160 °C.

6. Produit textile selon l'une quelconque des revendications précédentes, **caractérisé en ce que** pour ce qui est de l'alliage de polymères il s'agit d'un alliage de PET.

7. Produit textile selon la revendication 6, **caractérisé en ce que** l'alliage de PET contient au moins un autre polymère qui est choisi dans le groupe comprenant des polycarbonates, polyamides, polyétherimides polysulfones, polyéthersulfones, polyphénylsulfones thermoplastiques et des mélanges de ceux-ci.

8. Produit textile selon l'une quelconque des revendications précédentes, **caractérisé en ce que** les fibres de liage comportent un polymère thermoplastique, en particulier un élastomère thermoplastique.

9. Produit textile selon la revendication 8, **caractérisé en ce que** le polymère thermoplastique présente une température de transition vitreuse de > 70 °C à 160 °C.

10. Produit textile selon la revendication 8 ou 9, **caractérisé en ce que** le polymère thermoplastique est choisi dans le groupe comprenant des polyesters, des copolyesters, des polyesters-élastomères thermoplastiques, des polyesters thermoplastiques à base d'oléfines, des copolymères triséquencés de styrène tels qu'un copolymère styrène-éthylène-butylène-styrène, des polyamides tels que le polyamide 12, des polycarbonates thermoplastiques et des mélanges de ceux-ci.

11. Produit textile selon l'une quelconque des revendications précédentes, **caractérisé en ce que** pour ce qui est des fibres de liage il s'agit de fibres multicomposants, de préférence les fibres de liage possédant une structure de type noyau-enveloppe, l'enveloppe comportant un polymère thermoplastique, en particulier un élastomère thermoplastique.

12. Produit textile selon l'une quelconque des revendications précédentes, **caractérisé en ce que** le produit textile présente un volume de pores de 60 % à 90 %, par rapport au volume total du produit textile.

13. Produit textile selon l'une quelconque des revendications précédentes, **caractérisé en ce que** pour ce qui est du produit textile il s'agit d'une pièce moulée à base de fibres, en particulier d'une pièce moulée à base de fibres tridimensionnelle, de préférence pour le secteur des véhicules automobiles, des véhicules sur rail et/ou des aéronefs, de façon particulièrement préférée pour le secteur de l'automobile.

14. Procédé pour la fabrication d'un produit textile selon l'une quelconque des revendications précédentes, comprenant les étapes :
- fourniture de fibres de support et de liage et
- transformation des fibres de support et de liage en un produit textile,
**caractérisé en ce que** les fibres de support comportent un alliage de polymères ayant une température de transition vitreuse > 75 °C.

15. Utilisation d'un produit textile selon l'une quelconque des revendications 1 à 13, pour la fabrication d'articles textiles, de préférence textiles d'intérieur, textiles semi-techniques, textiles techniques, textiles de maison, textiles d'habillement et/ou textiles techniques médicaux.
